# EUROPEAN PATENT SPECIFICATION

(11) **EP 2 909 882 B1**
(45) Date of publication and mention of the grant of the patent: **14.06.2017**
(21) Application number: 12887131.6
(22) Date of filing: 22.10.2012
(51) Int. Cl.: H01M 4/86, H01M 4/90, H01M 4/92

(54) **PLATINUM ALLOY NANO CATALYST WITH A NON-PLATINUM CORE**
NANOKATALYSATOR AUS EINER PLATINLEGIERUNG MIT PLATINFREIEM KERN
NANOCATALYSEUR EN ALLIAGE DE PLATINE AYANT UN NOYAU QUI N'EST PAS EN PLATINE

(43) Date of publication of application: 26.08.2015
(73) Proprietor: Audi AG, 85045 Ingolstadt (DE); TOYOTA JIDOSHA KABUSHIKI KAISHA, Toyota-shi, Aichi-ken, 471-8571 (JP)
(72) Inventor: SHAO, Minhua, Farmington, Connecticut 06032 (US)
(74) Representative: Klunker . Schmitt-Nilson . Hirsch
(86) International application number: PCT/US2012/061286
(87) International publication number: WO 2014/065777

(56) References cited:
- JP-A- 2005 135 900
- JP-A- 2009 054 339
- US-A1- 2010 092 841
- US-A1- 2011 200 915
- US-A1- 2012 046 164
- US-A1- 2012 251 926
- US-B2- 7 855 021
- BYUNGKWON LIM ET AL: "Facile Synthesis of Bimetallic Nanoplates Consisting of Pd Cores and Pt Shells through Seeded Epitaxial Growth", NANO LETTERS, vol. 8, no. 8, 1 August 2008 (2008-08-01), pages 2535-2540, XP055258302, US ISSN: 1530-6984, DOI: 10.1021/nl8016434

## Description

### Technical Field

The subject matter of this disclosure generally relates to fuel cell components. More particularly, the subject matter of this disclosure relates to catalyst materials useful for fuel cell components.

### Background

Fuel cells generate electricity based upon an electrochemical reaction. Typical fuel cell arrangements include a membrane between two electrode layers for facilitating the electrochemical reactions. The electrode layers are often referred to as catalyst layers. One of the catalysts is typically referred to as the anode, while the other is typically referred to as a cathode.

At least the anode layer comprises a material such as platinum, which has proven effective for facilitating the oxidation of fuel, such as hydrogen, to turn the fuel into a positively charged ion and a negatively charged electron. While platinum has proven useful and effective, it is an expensive material.

There has been considerable effort at reducing the cost of fuel cell components. One suggestion has been to replace platinum or to reduce the amount of platinum required, which would reduce the cost of at least one of the electrode layers. A significant challenge associated with attempting to reduce the amount of platinum is that it tends to reduce the activity for facilitating the catalytic reaction.

It has been reported that the {111} facet of the Pt alloys are much more active than {100} and {110} facets (Stamenkovic VR, Fowler B, Mun BS, Wang G, Ross PN, Lucas CA, Markovic NM (2007) Improved oxygen reduction activity on Pt3Ni {111} via increased surface site availability. Science 315:493).

### SUMMARY

According to one example embodiment, a platinum alloy particle includes a core comprising a material that is different from platinum. A shell on the core comprises platinum. The shell has a plurality of facets. At least a majority of the facets are {111} facets.

According to an example embodiment, a fuel cell catalyst component comprises a platinum alloy made up of a core and a shell on the core. The core comprises a material that is different from platinum. The shell comprises platinum. The shell has a plurality of facets. At least a majority of the facets are {111} facets.

The various features and advantages associated with at least one disclosed example embodiment will become apparent to those skilled in the art from the following detailed description. The drawings that accompany the detailed description can be briefly described as follows.

### BRIEF DESCRIPTION OF THE DRAWINGS

Figure 1 schematically illustrates selected portions of an example fuel cell including a catalyst designed according to an embodiment of this invention.
Figure 2 schematically illustrates an example platinum alloy particle designed according to an embodiment of this invention.
Figure 3 schematically illustrates a {111} platinum facet from the example of Figure 2.
Figure 4 schematically illustrates an arrangement of platinum atoms in a {111} platinum facet.

### DETAILED DESCRIPTION

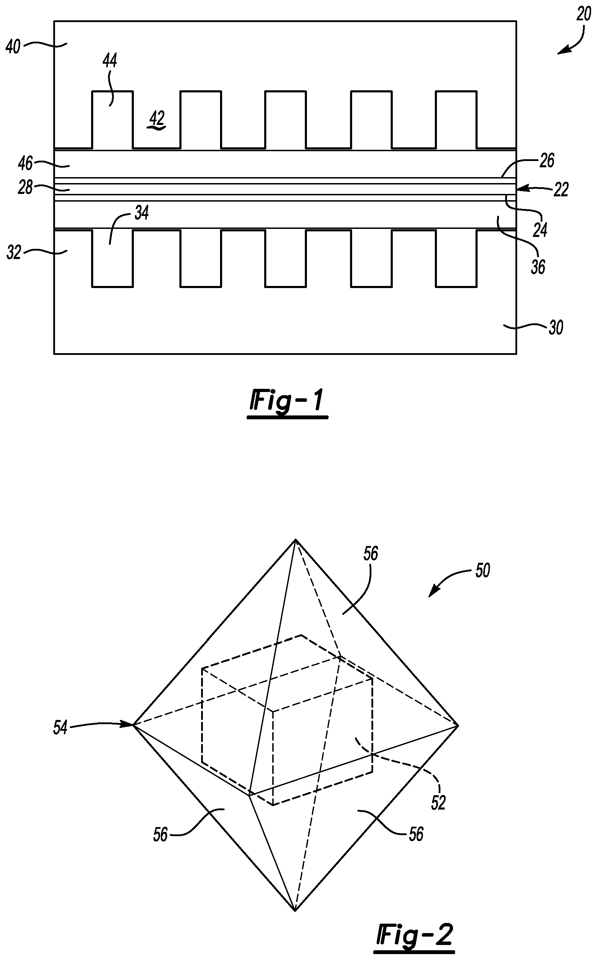

Figure 1 schematically shows selected portions of a fuel cell 20. A membrane electrode assembly 22 includes catalyst layers 24 and 26 on opposite sides of a membrane 28. For purposes of discussion, the catalyst layer 24 is considered an anode electrode layer and the catalyst layer 26 is considered a cathode electrode layer.

A fluid distribution plate 30 includes a plurality of ribs 32 and channels 34 for delivering a reactant, such as hydrogen, through a gas diffusion layer 36 to the electrode assembly 22. When the reactant, such as hydrogen, reaches the anode electrode catalyst layer 24, hydrogen ions and electrons are separated in a known manner as part of the electrochemical reaction facilitated by the fuel cell 20.

Another fluid distribution plate 40 includes a plurality of ribs 42 and channels 44 for delivering another reactant, such as oxygen, through a gas diffusion layer 46 to the cathode electrode catalyst layer 26.

At least one of the electrode catalyst layers comprise platinum. In this example, a platinum alloy facilitates the catalytic reaction that occurs at the corresponding catalyst layer. As schematically shown in Figure 2, a platinum alloy particle 50 includes a core 52 and a shell 54 on the core 52. In this example, the shell 54 has the shape of an octahedron having eight sides or facets 56. In another example the shell 54 has a tetrahedral shape.

The core 52 comprises a non-platinum material. In one example, the core 52 comprises palladium. In the illustrated example, the core 52 has a cube shape. Other shapes of the core 52 are possible, such as octahedron, cubo-octahedron, sphere. In another example, the core 52 comprises at least one noble metal, such as Ru, Rh, Pd, Ag, Re, Os, Ir and Au. In another example, the core 52 comprises a metal alloy, such as PdCo. In another example, the core 52 comprises a metal oxide, a carbide or a polymer.

The example shell 54 comprises a platinum alloy including Pt and at least one transition metal, such as Ni, Co, Fe, Cr, V, Mn, Cu, Zn, Ti, Zr, Y, W, Ta. Other Pt alloys comprise Pt and at least one other noble metal, such as Ru, Rh, Pd, Ag, Re, Os, Ir, Au. In another example, the shell 54 comprises platinum.

Using a core 52 of a non-platinum material provides a less expensive core. At the same time, the example particle 50 has a shell 54 with a high activity. The core 52 serves as a seed for platinum-based shell growth.

A majority of the facets 56 on the example particle 50 are {111} facets. In one example, the {111} facets comprise a Pt alloy, such as Pt₃Ni. Having a majority of the facets 56 as {111} facets maintains a high activity for catalytic reactions. In some examples, all of the facets 56 are {111} facets. In some examples platinum is used instead of Pt₃Ni; and, in such cases, the {111} facets are platinum {111} facets. Utilizing the core 52 of a non-platinum material facilities reducing the expense associated with achieving such a high activity because less platinum is required.

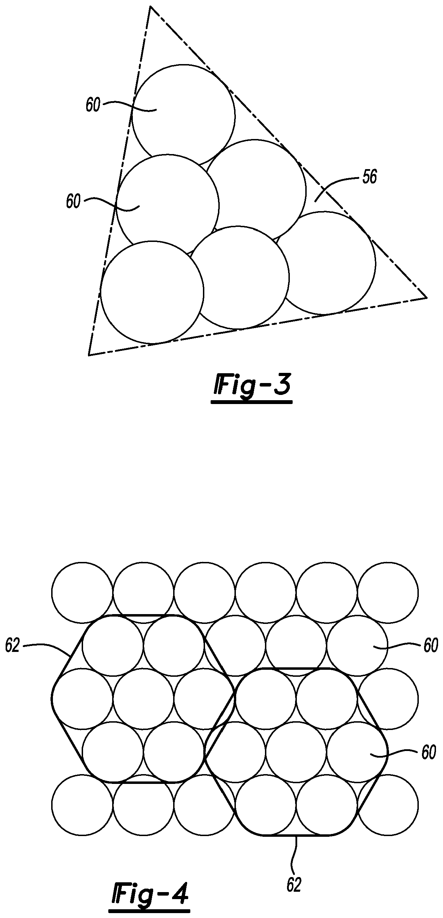

Figure 3 schematically illustrates an arrangement of platinum atoms 60 on an example facet 56 in a {111} facet arrangement. Figure 4 schematically illustrates an arrangement of platinum atoms 60 in a hexagonal packaging corresponding to a {111} facet. The hexagonal outlines schematically shown at 62 demonstrate a tight packaging of the platinum atoms 60.

The example catalyst particle 50 provides the ability to achieve the goal of reducing the cost of a fuel cell catalyst without suffering the drawback of having a reduced activity for the catalytic reaction.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

## Claims

1. A fuel cell catalyst particle, comprising:
a core comprising a material that is different from platinum; and
a shell on the core, the shell comprising platinum, the shell having a plurality of facets,
**characterized in that** the majority of the facets are platinum alloy {111} facets.

2. The fuel cell catalyst particle of claim 1 , wherein all of the facets are {111} facets.

3. The fuel cell catalyst particle of claim 1, wherein the shell comprises platinum and at least one transition metal.

4. The fuel cell catalyst particle of claim 3, wherein the transition metal comprises at least one of Ni, Co, Fe, Cr, V, Mn, Cu, Zn, Ti, Zr, Y, W or Ta.

5. The fuel cell catalyst particle of claim 1, wherein the shell comprises platinum and at least one other noble metal.

6. The fuel cell catalyst particle of claim 5, wherein the other noble metal comprises at least one of Ru, Rh, Pd, Ag, Re, Os, Ir orAu.

7. The fuel cell catalyst particle of claim 1, wherein the shell has an octahedral shape.

8. The fuel cell catalyst particle of claim 1, wherein the shell has a tetrahedral shape.

9. The fuel cell catalyst particle of claim 1, wherein the core comprises at least one noble metal.

10. The fuel cell catalyst particle of claim 9, wherein the noble metal comprises at least one of Ru, Rh, Pd, Ag, Re, Os, Ir orAu.

11. The fuel cell catalyst particle of claim 1, wherein the core comprises a palladium alloy.

12. The fuel cell catalyst particle of claim 1, wherein the core comprises at least one of a carbide, a metal oxide or a polymer.

13. A fuel cell, comprising:
a membrane;
a first catalyst layer on one side of the membrane; and
a second catalyst layer on an opposite side of the membrane,
wherein at least one of the catalyst layers comprises a plurality of particles according to any one of claims 1 to 12.

## Patentansprüche

1. Brennstoffzellen-Katalysatorpartikel, aufweisend:
einen Kern, der ein Material aufweist, das von Platin verschieden ist; und
eine Schale auf dem Kern, wobei die Schale Platin aufweist und die Schale eine Mehrzahl von Facetten besitzt,
**dadurch gekennzeichnet**, das es sich bei dem Großteil der Facetten um Platinlegierung-{111}-Facetten handelt.

2. Brennstoffzellen-Katalysatorpartikel nach Anspruch 1,
wobei alle der Facetten {111}-Facetten sind.

3. Brennstoffzellen-Katalysatorpartikel nach Anspruch 1,
wobei die Schale Platin und mindestens ein Übergangsmetall aufweist.

4. Brennstoffzellen-Katalysatorpartikel nach Anspruch 3,
wobei das Übergangsmetall mindestens eines von Ni, Co, Fe, Cr, V, Mn, Cu, Zn, Ti, Zr, Y, W oder Ta aufweist.

5. Brennstoffzellen-Katalysatorpartikel nach Anspruch 1,
wobei die Schale Platin und mindestens ein anderes Edelmetall aufweist.

6. Brennstoffzellen-Katalysatorpartikel nach Anspruch 5,
wobei das andere Edelmetall mindestens eines von Ru, Rh, Pd, Ag, Re, Os, Ir oder Au aufweist.

7. Brennstoffzellen-Katalysatorpartikel nach Anspruch 1,
wobei die Schale eine oktaedrische Form aufweist.

8. Brennstoffzellen-Katalysatorpartikel nach Anspruch 1,
wobei die Schale eine tetraedrische Form aufweist.

9. Brennstoffzellen-Katalysatorpartikel nach Anspruch 1,
wobei der Kern mindestens ein Edelmetall aufweist.

10. Brennstoffzellen-Katalysatorpartikel nach Anspruch 9,
wobei das Edelmetall mindestens eines von Ru, Rh, Pd, Ag, Re, Os, Ir oder Au aufweist.

11. Brennstoffzellen-Katalysatorpartikel nach Anspruch 1,
wobei der Kern eine Palladiumlegierung aufweist.

12. Brennstoffzellen-Katalysatorpartikel nach Anspruch 1,
wobei der Kern mindestens eines von einem Karbid, einem Metalloxid oder einem Polymer aufweist.

13. Brennstoffzelle, aufweisend:
eine Membran;
eine erste Katalysatorschicht auf der einen Seite der Membran; und
eine zweite Katalysatorschicht auf einer gegenüberliegenden Seite der Membran,
wobei mindestens eine der Katalysatorschichten eine Mehrzahl von Partikeln nach einem der Ansprüche 1 bis 12 aufweist.

## Revendications

1. Particule de catalyseur à pile à combustible, comprenant :
un noyau comprenant un matériau qui est différent du platine; et une enveloppe sur le noyau, l'enveloppe comprenant du platine, l'enveloppe ayant une pluralité de facettes,
**caractérisée en ce que** la majorité des facettes sont des facettes en alliage de platine {111}.

2. La particule de catalyseur à pile à combustible selon la revendication 1, dans laquelle toutes les facettes sont des facettes {111}.

3. La particule de catalyseur à pile à combustible selon la revendication 1, dans laquelle l'enveloppe comprend du platine et au moins un métal de transition.

4. La particule de catalyseur à pile à combustible selon la revendication 3, dans laquelle le métal de transition comprend au moins l'un des Ni, Co, Fe, Cr, V, Mn, Cu, Zn, Ti, Zr, Y, W ou Ta.

5. La particule de catalyseur à pile à combustible selon la revendication 1, dans laquelle l'enveloppe comprend du platine et au moins un autre métal noble.

6. La particule de catalyseur à pile à combustible selon la revendication 5, dans laquelle l'autre métal noble comprend au moins l'un des Ru, Rh, Pd, Ag, Re, Os, Ir ou Au.

7. La particule de catalyseur à pile à combustible selon la revendication 1, dans laquelle l'enveloppe a une forme octaédrique.

8. La particule de catalyseur à pile à combustible selon la revendication 1, dans laquelle l'enveloppe a une forme tétraédrique.

9. La particule de catalyseur à pile à combustible selon la revendication 1, dans laquelle le noyau comprend au moins un métal noble.

10. La particule de catalyseur à pile à combustible selon la revendication 9, dans laquelle le métal noble comprend au moins l'un des Ru, Rh, Pd, Ag, Re, Os, Ir ou Au.

11. Particule de catalyseur à pile à combustible selon la revendication 1, dans laquelle le noyau comprend un alliage de palladium.

12. Particule de catalyseur à pile à combustible selon la revendication 1, dans laquelle le noyau comprend au moins l'un parmi un carbure, un oxyde métallique ou un polymère.

13. Une pile à combustible, comprenant :
une membrane;
une première couche de catalyseur d'un côté de la membrane ; et
une seconde couche de catalyseur sur un côté opposé de la membrane,
dans laquelle au moins une des couches de catalyseur comprend une pluralité de particules selon l'une quelconque des revendications 1 à 12.
